# EUROPÄISCHE PATENTSCHRIFT

(11) **EP 3 691 944 B1**
(45) Veröffentlichungstag und Bekanntmachung des Hinweises auf die Patenterteilung: **01.12.2021**
(21) Anmeldenummer: 18779224.7
(22) Anmeldetag: 12.09.2018
(51) Int. Cl.: B60T 17/22

(54) **DRUCKSENSOR FÜR EIN FAHRZEUG**
PRESSURE SENSOR FOR VEHICLE
CAPTEUR DE PRESSION POUR VÉHICULE

(30) Priorität: 05.10.2017 DE 102017217647
(43) Veröffentlichungstag der Anmeldung: 12.08.2020
(73) Patentinhaber: Robert Bosch GmbH, 70442 Stuttgart (DE)
(72) Erfinder: ETO, Masaya, 74199 Untergruppenbach (DE)
(86) Internationale Anmeldenummer: PCT/EP2018/074679
(87) Internationale Veröffentlichungsnummer: WO 2019/068442

(56) Entgegenhaltungen:
- WO-A1-2017/098797
- JP-A- 2009 068 350
- US-A1- 2012 144 923
- US-A1- 2016 178 474

## Beschreibung

Die Erfindung geht aus von einem Drucksensor für ein Fahrzeug nach der Gattung des unabhängigen Patentanspruchs 1. Gegenstand der vorliegenden Erfindung ist auch ein Bremssystem für ein Fahrzeug mit mindestens einem solchen Drucksensor.

Aus dem Stand der Technik sind Drucksensoren für Fahrzeuge, mit einem Gehäuse bekannt, in welchem mindestens eine Sensoreinheit angeordnet ist, welche eine Druckdifferenz zwischen einem an einem Messanschluss herrschenden Druck und Atmosphärendruck ermittelt. Die mindestens eine Sensoreinheit erfasst den Atmosphärendruck an mindestens zwei Referenzdruckbohrungen. Solche Drucksensoren können beispielsweise in einem Bremskraftverstärker eines Fahrzeugs eingesetzt werden, um eine Druckdifferenz zwischen einem im Bremskraftverstärker herrschenden Bremsdruck und Atmosphärendruck zu ermitteln. Ein solcher Drucksensor ist im Fahrbetrieb Regenwasser ausgesetzt. Ein Gehäuse des Drucksensors ist so ausgelegt, dass trotz eingedrungenem Regenwasser der Drucksensor den korrekten Atmosphärendruck aufnehmen kann. Daher umfasst der Drucksensor in der Regel mindestens zwei Referenzdruckbohrungen, welche mit Atmosphärendruck beaufschlagt sind, so dass der Drucksensor an zwei Stellen direkt die Druckdifferenz zwischen dem im Bremskraftverstärker herrschenden Bremsdruck und Atmosphärendruck messen kann. Hierbei sind die beiden Referenzdruckbohrungen so angeordnet, dass eine erste Referenzdruckbohrung geodätisch höher als eine zweite Referenzdruckbohrung angeordnet ist. Aufgrund der Schwerkraft fließt das Wasser aus der höher angeordneten ersten Referenzdruckbohrung zur tiefer angeordneten zweiten Referenzdruckbohrung und weiter aus dem Gehäuse ab. Es kann aber vorkommen, dass eingedrungenes Wasser aufgrund der Oberflächenspannung sowohl in der tiefer angeordneten zweiten Referenzdruckbohrung als auch in der höher angeordneten ersten Referenzdruckbohrung hängenbleibt, so dass der Atmosphärendruck in keiner der Referenzdruckbohrungen korrekt erfasst werden kann.

Aus der US 2016/178474 A1 ist ein gattungsgemäßer Drucksensor für ein Fahrzeug bekannt, welcher ein Gehäuse umfasst, in welchem mindestens eine Sensoreinheit angeordnet ist. Die Sensoranordnung ermittelt eine Druckdifferenz zwischen einem an einem Messanschluss herrschenden Druck und Atmosphärendruck.

### Offenbarung der Erfindung

Der Drucksensor für ein Fahrzeug mit den Merkmalen des unabhängigen Patentanspruchs 1 hat den Vorteil, dass zumindest aus einer der mindestens zwei Referenzdruckbohrungen das eingedrungene Wasser entfernt werden kann, so dass der Drucksensor den Atmosphärendruck korrekt erfassen kann.

Ausführungsformen der vorliegenden Erfindung stellen einen Drucksensor für ein Fahrzeug, mit einem Gehäuse zur Verfügung, in welchem mindestens eine Sensoreinheit angeordnet ist, welche eine Druckdifferenz zwischen einem an einem Messanschluss herrschenden Druck und Atmosphärendruck ermittelt. Die mindestens eine Sensoreinheit erfasst den Atmosphärendruck an mindestens zwei Referenzdruckbohrungen. Hierbei umfasst eine Sensorentwässerung einen Verbindungskanal, welcher die mindestens zwei Referenzdruckbohrungen miteinander verbindet.

Zudem wird ein Bremssystem für ein Fahrzeug vorgeschlagen, welches mindestens einen Bremskraftverstärker, mindestens einen Bremskreis und mindestens einen solchen Drucksensor umfasst.

Durch die in den abhängigen Ansprüchen aufgeführten Maßnahmen und Weiterbildungen sind vorteilhafte Verbesserungen des im unabhängigen Patentanspruch 1 angegebenen Drucksensors und des im unabhängigen Patentanspruch 7 angegebenen Bremssystems für ein Fahrzeug möglich.

Besonders vorteilhaft ist, dass im eingebauten Zustand eine erste Referenzdruckbohrung im Gehäuse geodätisch höher als eine zweite Referenzdruckbohrung angeordnet sein kann. Zudem kann der Verbindungskanal basierend auf der Oberflächenspannung eingedrungenes Wasser aus der höheren ersten Referenzdruckbohrung absaugen und zur unteren zweiten Referenzdruckbohrung leiten. Aufgrund der Schwerkraft fließt das Wasser aus der höher angeordneten ersten Referenzdruckbohrung zur tiefer angeordneten zweiten Referenzdruckbohrung und weiter aus dem Gehäuse ab. Zudem kann der Verbindungskanal das Wasser aus der höheren ersten Referenzdruckbohrung absaugen und zur unteren zweiten Referenzdruckbohrung leiten. Dadurch sinkt der Wasserspiegel in der höheren ersten Referenzdruckbohrung und im höheren Bereich des Verbindungskanals, so dass in vorteilhafter Weise zumindest in der höheren ersten Referenzdruckbohrung kein Wasser mehr steht, und der Drucksensor über die erste Referenzdruckbohrung den Atmosphärendruck als Referenzdruck erfassen kann.

In vorteilhafter Ausgestaltung des Drucksensors kann das Gehäuse einen Aufnahmeraum umfassen, in welchem die Sensoreinheit angeordnet sein kann. Zudem kann ein Deckel mit dem Gehäuse verbunden sein und den Aufnahmeraum, den Verbindungskanal und die mindestens zwei Referenzdruckbohrungen abdecken. Der Deckel kann beispielsweise verhindern, dass während des Fahrbetriebs Wasser oder Feuchtigkeit in den Aufnahmeraum der Sensoreinheit gelangt. Da die Referenzdruckbohrungen dem Atmosphärendruck ausgesetzt sind, kann der Deckel nicht verhindern, dass Wasser oder Feuchtigkeit in den Gehäusebereich gelangt, an welchem die Referenzdruckbohrungen angeordnet sind.

In weiterer vorteilhafter Ausgestaltung des Drucksensors kann das Gehäuse als Kunststoffspritzgussteil ausgeführt werden. Dies ermöglicht in vorteilhafter Weise eine kostengünstige Massenfertigung des Gehäuses.

In vorteilhafter Ausgestaltung des Bremssystems kann ein erster Drucksensor eine erste Druckdifferenz zwischen einem im Bremskraftverstärker herrschenden Bremsdruck und Atmosphärendruck ermitteln Zusätzlich oder alternativ kann ein zweiter Drucksensor eine zweite Druckdifferenz zwischen einem in dem mindestens einen Bremskreis herrschenden Bremsdruck und Atmosphärendruck ermitteln.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische perspektivische Schnittdarstellung eines Ausführungsbeispiels eines erfindungsgemäßen Drucksensors für ein Fahrzeug.
Fig. 2 zeigt eine schematische perspektivische Darstellung eines Gehäuses für den Drucksensor aus Fig. 1 von oben.
Fig. 3 bis 5 zeigen einen Ausschnitt des Gehäuses aus Fig. 2 während verschiedenen Phasen eines Spritzwassertests.

### Ausführungsformen der Erfindung

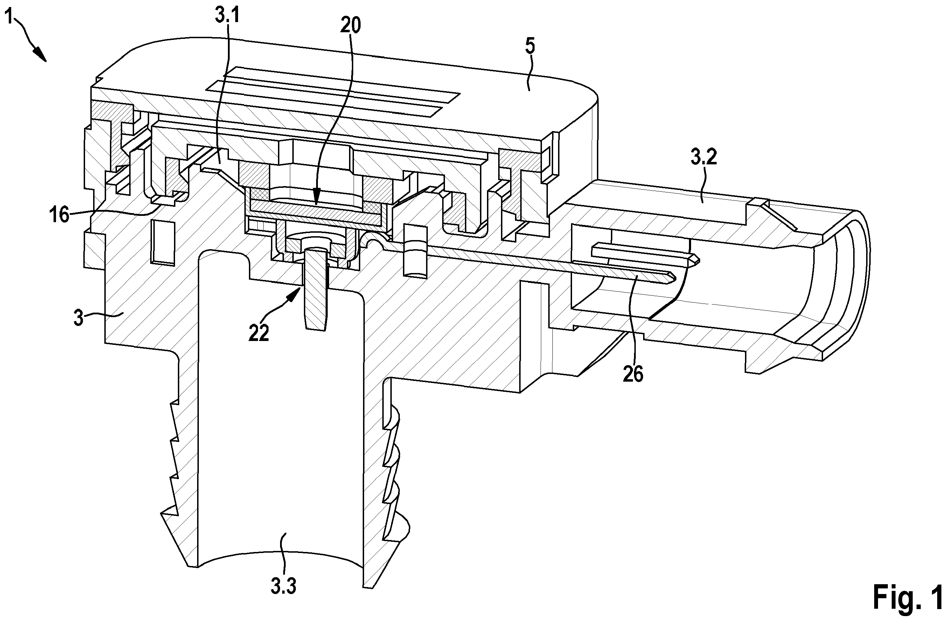

Wie aus Fig. 1 bis 5 ersichtlich ist, umfasst das dargestellte Ausführungsbeispiel eines erfindungsgemäßen Drucksensors 1 für ein Fahrzeug, mit einem Gehäuse 3, in welchem mindestens eine Sensoreinheit 20 angeordnet ist, welche eine Druckdifferenz zwischen einem an einem Messanschluss 3.3 herrschenden Druck und Atmosphärendruck ermittelt. Die mindestens eine Sensoreinheit 20 erfasst den Atmosphärendruck an mindestens zwei Referenzdruckbohrungen 12, 14. Hierbei umfasst eine Sensorentwässerung 10 einen Verbindungskanal 16, welcher die mindestens zwei Referenzdruckbohrungen 12, 14 miteinander verbindet.

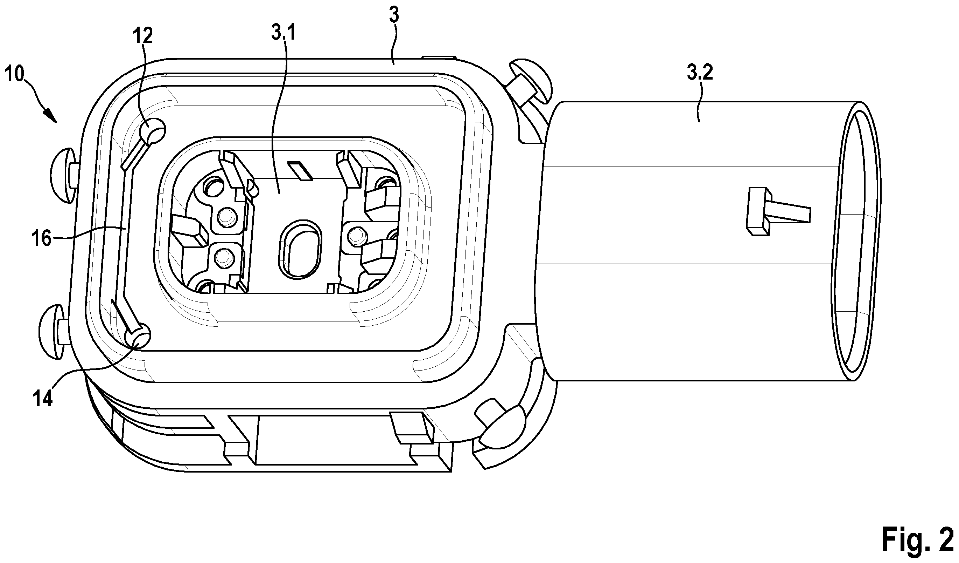

Wie aus Fig. 2 weiter ersichtlich ist, umfasst der Drucksensor 1 im dargestellten Ausführungsbeispiel zwei Referenzdruckbohrungen 12, 14. Hierbei ist im eingebauten Zustand eine erste Referenzdruckbohrung 12 im Gehäuse 3 geodätisch höher als eine zweite Referenzdruckbohrung 14 angeordnet.

Wie aus Fig. 1 und 2 weiter ersichtlich ist, umfasst das Gehäuse 3 im dargestellten Ausführungsbeispiel einen Aufnahmeraum 3.1, in welchem die Sensoreinheit 20 angeordnet ist. Der Aufnahmeraum 3.1 ist über eine Dichtung 22 zum Messanschluss 3.3 hin abgedichtet. Des Weiteren ist ein Deckel 5 mit dem Gehäuse 3 verbunden und deckt den Aufnahmeraum 3.1, den Verbindungskanal 16 und die mindestens zwei Referenzdruckbohrungen 12, 14 ab. Im dargestellten Ausführungsbeispiel sind das Gehäuse 3 und der Deckel 5 jeweils als Kunststoffspritzgussteile ausgeführt, in welche Leitungen als Einlegeteile eingelegt sind. Im dargestellten Ausführungsbeispiel bereitet die Sensoreinheit 20 die erfassten Messwerte auf und ermittelt und gibt die gewünschte Druckdifferenz bzw. die gewünschten Sensordaten über eine Schnittstelle aus. Zur Ausgabe der Sensordaten umfasst das Gehäuse 3 eine Kontaktaufnahme 3.2 als mechanische Schnittstelle, in welche ein korrespondierender Stecker eingeführt werden kann, und Kontaktelemente 26, welche mit der Sensoreinheit 20 verbunden sind, und über welche elektrische Verbindungen zu entsprechenden Gegenkontaktelementen im Stecker hergestellt werden können. Im dargestellten Ausführungsbeispiel ist die Kontaktaufnahme 3.2 an das Gehäuse 3 angeformt.

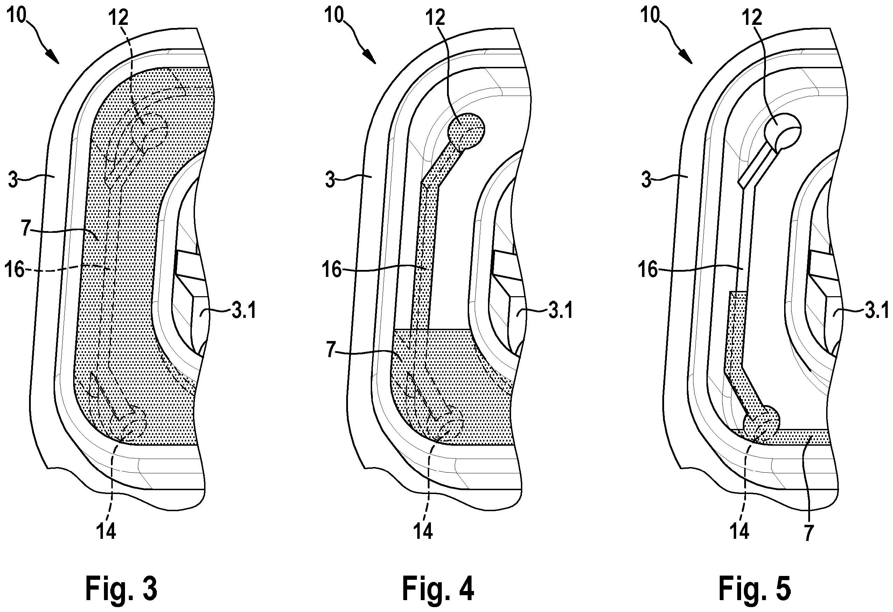

Unter Bezugnahme auf Fig. 3 bis 5 wird nachfolgend der Ablauf eines Spritzwassertest für den Drucksensor 1 beschrieben.

Wie aus Fig. 3 weiter ersichtlich ist, wird das Gehäuse 3 des Drucksensors 1 im Spritzwassertest zumindest im Abschnitt der Referenzdruckbohrungen 12, 14 mit Wasser 7 gefüllt. Dann wird das Gehäuse 3 in seine in Fig. 4 und 5 dargestellte Einbaulage gedreht, so dass die erste Referenzdruckbohrung 12 höher als die zweite Referenzdruckbohrung 14 angeordnet ist. Wie aus Fig. 4 weiter ersichtlich ist, fließt das Wasser 7 aufgrund der Schwerkraft aus der höher angeordneten ersten Referenzdruckbohrung 12 zur tiefer angeordneten zweiten Referenzdruckbohrung 14 und weiter aus dem Gehäuse 3 ab. Wie aus Fig. 5 weiter ersichtlich ist saugt der Verbindungskanal 16 basierend auf der Oberflächenspannung zusätzlich das eingedrungene Wasser 7 aus der höheren ersten Referenzdruckbohrung 12 ab und leitet es zur unteren zweiten Referenzdruckbohrung 14. Dadurch sinkt der Wasserspiegel in der höheren ersten Referenzdruckbohrung 12 und im höheren Bereich des Verbindungskanals 16, so dass zumindest in der höheren ersten Referenzdruckbohrung 12 kein Wasser 7 mehr steht und die Sensoreinheit 20 des Drucksensors 3 über die erste Referenzdruckbohrung 12 den Atmosphärendruck als Referenzdruck erfassen kann.

Ausführungsformen des erfindungsgemäßen Drucksensors 1 können vorzugsweise in Bremssystemen für Fahrzeuge eingesetzt werden, welche mindestens einen Bremskraftverstärker und mindestens einen Bremskreis umfassen. So kann beispielsweise ein erster Drucksensor 1 eine erste Druckdifferenz zwischen einem im Bremskraftverstärker herrschenden Bremsdruck und Atmosphärendruck ermitteln. Ein zweiter Drucksensor 1 kann beispielsweise eine zweite Druckdifferenz zwischen einem in dem mindestens einen Bremskreis herrschenden Bremsdruck und Atmosphärendruck ermitteln.

Ausführungsformen der vorliegenden Erfindung stellen einen Drucksensor für ein Fahrzeug zur Verfügung, bei welchem im eingebauten Zustand in vorteilhafter Weise zumindest aus einem der Referenzdruckbohrungen das eingedrungene Wasser entfernt wird, so dass der Drucksensor den Atmosphärendruck korrekt erfassen kann.

## Patentansprüche

1. Drucksensor (1) für ein Fahrzeug, mit einem Gehäuse (3), in welchem mindestens eine Sensoreinheit (20) angeordnet ist, welche eine Druckdifferenz zwischen einem an einem Messanschluss (3.3) herrschenden Druck und Atmosphärendruck ermittelt, **dadurch gekennzeichnet, dass** die mindestens eine Sensoreinheit (20) den Atmosphärendruck an mindestens zwei Referenzdruckbohrungen (12, 14) erfasst, wobei eine Sensorentwässerung (10) einen Verbindungskanal (16) umfasst, welcher die mindestens zwei Referenzdruckbohrungen (12, 14) miteinander verbindet.

2. Drucksensor (1) nach Anspruch 1, **dadurch gekennzeichnet, dass** im eingebauten Zustand eine erste Referenzdruckbohrung (12) im Gehäuse (3) geodätisch höher als eine zweite Referenzdruckbohrung (14) angeordnet ist.

3. Drucksensor (1) nach Anspruch 2, **dadurch gekennzeichnet, dass** der Verbindungskanal (16) ausgeführt ist, basierend auf der Oberflächenspannung eingedrungenes Wasser (7) aus der höheren ersten Referenzdruckbohrung (12) abzusaugen und zur unteren zweiten Referenzdruckbohrung (14) zu leiten.

4. Drucksensor (1) nach einem der Ansprüche 1 bis 3, **dadurch gekennzeichnet, dass** das Gehäuse (3) einen Aufnahmeraum (3.1) umfasst, in welchem die Sensoreinheit (20) angeordnet ist.

5. Drucksensor (1) nach Anspruch 4, **dadurch gekennzeichnet, dass** ein Deckel (5) mit dem Gehäuse (3) verbunden ist und den Aufnahmeraum (3.1), den Verbindungskanal (16) und die mindestens zwei Referenzdruckbohrungen (12, 14) abdeckt.

6. Drucksensor (1) nach einem der Ansprüche 1 bis 5, **dadurch gekennzeichnet, dass** das Gehäuse (3) als Kunststoffspritzgussteil ausgeführt ist.

7. Bremssystem für ein Fahrzeug, mit mindestens einem Bremskraftverstärker, mindestens einem Bremskreis und mindestens einem Drucksensor (1), **dadurch gekennzeichnet, dass** der mindestens eine Drucksensor (1) nach zumindest einem der Ansprüche 1 bis 6 ausgeführt ist.

8. Bremssystem nach Anspruch 7, **dadurch gekennzeichnet, dass** ein erster Drucksensor (1) eine erste Druckdifferenz zwischen einem im Bremskraftverstärker herrschenden Bremsdruck und Atmosphärendruck ermittelt.

9. Bremssystem nach Anspruch 7 oder 8, **dadurch gekennzeichnet, dass** ein zweiter Drucksensor (1) eine zweite Druckdifferenz zwischen einem in dem mindestens einen Bremskreis herrschenden Bremsdruck und Atmosphärendruck ermittelt.

## Claims

1. Pressure sensor (1) for a vehicle, having a housing (3) in which there is arranged at least one sensor unit (20) that determines a pressure difference between a pressure prevailing at a measurement connection (3.3) and atmospheric pressure, **characterized in that** the at least one sensor unit (20) senses the atmospheric pressure at at least two reference pressure holes (12, 14), wherein a sensor drainage means (10) comprises a connecting channel (16) that connects the at least two reference pressure holes (12, 14) to each other.

2. Pressure sensor (1) according to Claim 1, **characterized in that**, in the installed state, a first reference pressure hole (12) in the housing (3) is arranged geodetically higher than a second reference pressure hole (14).

3. Pressure sensor (1) according to Claim 2, **characterized in that** the connecting channel (16) is realized, on the basis of the surface tension, to suck penetrated water (7) out of the higher, first reference pressure hole (12) and to conduct it to the lower, second reference pressure hole (14) .

4. Pressure sensor (1) according to any one of Claims 1 to 3, **characterized in that** the housing (3) comprises a receiving space (3.1) in which the sensor unit (20) is arranged.

5. Pressure sensor (1) according to Claim 4, **characterized in that** a cover (5) is connected to the housing (3) and covers the receiving space (3.1), the connecting channel (16) and the at least two reference pressure holes (12, 14).

6. Pressure sensor (1) according to any one of Claims 1 to 5, **characterized in that** the housing (3) is realized as a plastic injection-molded part.

7. Braking system for a vehicle, comprising at least one brake booster, at least one brake circuit and at least one pressure sensor (1), **characterized in that** the at least one pressure sensor (1) is realized according to at least one of Claims 1 to 6.

8. Braking system according to Claim 7, **characterized in that** a first pressure sensor (1) determines a first pressure difference, between a brake pressure prevailing in the brake booster and atmospheric pressure.

9. Braking system according to Claim 7 or 8, **characterized in that** a second pressure sensor (1) determines a second pressure difference, between a brake pressure prevailing in the at least one brake circuit and atmospheric pressure.

## Revendications

1. Capteur de pression (1) destiné à un véhicule, ledit capteur de pression comprenant un boîtier (3) dans lequel est disposée au moins une unité de capteur (20) qui détermine une différence de pression entre une pression régnant au niveau d'un raccord de mesure (3.3) et la pression atmosphérique, **caractérisé en ce que** l'au moins une unité de capteur (20) détecte la pression atmosphérique au niveau d'au moins deux alésages de pression de référence (12, 14), un drainage de capteur (10) comprenant un canal de liaison (16) qui relie les au moins deux alésages de pression de référence (12, 14) entre eux.

2. Capteur de pression (1) selon la revendication 1, **caractérisé en ce que**, à l'état installé, un premier alésage de pression de référence (12) ménagé dans le boîtier (3) est disposé géodésiquement plus haut qu'un deuxième alésage de pression de référence (14).

3. Capteur de pression (1) selon la revendication 2, **caractérisé en ce que** le canal de liaison (16) est conçu pour aspirer l'eau (7) qui a pénétré par le premier alésage de pression de référence supérieur (12) et pour l'orienter vers le deuxième alésage de pression de référence inférieur (14), sur la base de la tension superficielle.

4. Capteur de pression (1) selon l'une des revendications 1 à 3, **caractérisé en ce que** le boîtier (3) comprend un espace de réception (3.1) dans lequel l'unité de capteur (20) est disposée.

5. Capteur de pression (1) selon la revendication 4, **caractérisé en ce qu'**un couvercle (5) est relié au boîtier (3) et recouvre l'espace de réception (3.1), le canal de liaison (16) et les au moins deux alésages de pression de référence (12, 14).

6. Capteur de pression (1) selon l'une des revendications 1 à 5, **caractérisé en ce que** le boîtier (3) est réalisé sous la forme d'une pièce en matière synthétique moulée par injection.

7. Système de freinage destiné à un véhicule, ledit système comprenant au moins un servofrein, au moins un circuit de freinage et au moins un capteur de pression (1), **caractérisé en ce que** l'au moins un capteur de pression (1) est conçu selon l'une au moins des revendications 1 à 6.

8. Système de freinage selon la revendication 7, **caractérisé en ce qu'**un premier capteur de pression (1) détermine une première différence de pression entre une pression de freinage régnant dans le servofrein et la pression atmosphérique.

9. Système de freinage selon la revendication 7 ou 8, **caractérisé en ce qu'**un deuxième capteur de pression (1) détermine une deuxième différence de pression entre une pression de freinage régnant dans l'au moins un circuit de freinage et la pression atmosphérique.
